(19) Europäisches Patentamt / European Patent Office / Office européen des brevets

(11) **EP 3 225 921 B1**

(12) **EUROPEAN PATENT SPECIFICATION**

(45) Date of publication and mention
of the grant of the patent:
**21.11.2018 Bulletin 2018/47**

(51) Int Cl.:
*F24D 3/18* (2006.01)  *F25B 30/02* (2006.01)
*F24D 19/10* (2006.01)

(21) Application number: **17162843.1**

(22) Date of filing: **24.03.2017**

(54) **HEAT-PUMP HEAT SOURCE APPARATUS**

WÄRMEPUMPENWÄRMEQUELLENVORRICHTUNG

APPAREIL DE SOURCE THERMIQUE DE POMPE À CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2016 JP 2016065613**

(43) Date of publication of application:
**04.10.2017 Bulletin 2017/40**

(73) Proprietor: **Toshiba Carrier Corporation
Kawasaki-shi, Kanagawa 212-8585 (JP)**

(72) Inventors:
• **OKAMOTO, Takahiro
  Shizuoka-ken, Shizuoka 416-8521 (JP)**
• **WATANABE, Yoshinori
  Shizuoka-ken, Shizuoka 416-8521 (JP)**

(74) Representative: **Lins, Martina
Gramm, Lins & Partner
Patent- und Rechtsanwälte PartGmbB
Theodor-Heuss-Strasse 1
38122 Braunschweig (DE)**

(56) References cited:
**EP-A1- 2 615 384  EP-A1- 2 873 932
EP-A2- 2 610 558  WO-A1-2015/025585**

**Description**

FIELD

Embodiments described herein relate generally to a heat-pump heat source apparatus which includes a heat-pump refrigerating cycle and obtains hot water used for space heating and hot water supply by execution of the heat-pump refrigerating cycle.

BACKGROUND

There is known a heat-pump heat source apparatus which includes a heat-pump refrigerating cycle, extracts heat from the outdoor air by executing the heat-pump refrigerating cycle, and sends hot water having been heated with the extracted heat to a space heating unit and a hot water supply tank as loads by a pump (PATENT LITERATURE: JP 2006-258340 A).

EP 2 873 932 A1 discloses a heat-pump heat source apparatus according to the preamble of claim 1 and describes a hot and cold water air conditioning system with a water temperature sensor, a heat pump heat source apparatus, a water circulation pump, a controller and a compressor. The hot and cold water air conditioning system is configured to restrict the heat pump heat source apparatus from performing an on/off cycle operation.

The apparatus including the heat-pump refrigerating cycle detects the temperature of water circulating between the apparatus and the loads, and performs on/off control for the operation of the compressor of the heat-pump refrigerating cycle such that the detected temperature is a preset temperature.

In the heat-pump heat source apparatus, the pump is operated at any time to accurately detect the temperature of water changing based on the state of the loads. Thus, the power consumption of the pump is large. When the power consumption is large, the energy-saving performance obtained by employing the heat-pump refrigerating cycle is impaired.

BRIEF DESCRIPTION OF THE DRAWINGS

FIG. 1 is a block diagram illustrating the configuration of one embodiment.
FIG. 2 is a flowchart illustrating the control of a main controller in the embodiment.
FIG. 3 is a timing chart illustrating the operation state of the compressor and the pump of the embodiment.

DETAILED DESCRIPTION

In general, according to one embodiment, a heat-pump heat source apparatus includes a heat-pump refrigerating cycle including a compressor, a water heat exchanger, a pressure reducing unit and a heat source side heat exchanger, a pump which causes water to circulate between the water heat exchanger and a load, a water temperature sensor which detects temperature of the circulating water, and a controller which controls the compressor and the pump in accordance with the detected temperature of the water temperature sensor. The controller performs on/off control for an operation of the compressor such that the detected temperature of the water temperature sensor in an on-state of the pump is a preset temperature. The controller estimates a necessary time to a next presumable start of the operation of the compressor based on change in the detected temperature of the water temperature sensor in a first time after stopping the operation of the compressor. The first time after stopping the operation of the compressor, the controller stops the operation of the pump. The estimated necessary time after stopping the operation of the pump, the controller causes the pump to operate for only a second time.

Hereinafter, one embodiment of a heat-pump heat source apparatus will be described with reference to the drawings.

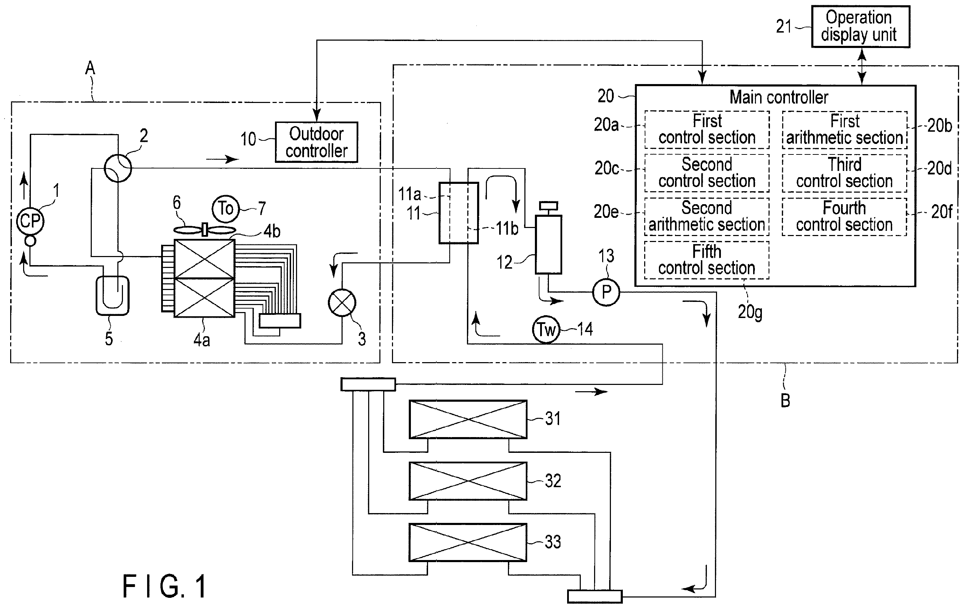

As illustrated in FIG. 1, a discharge port of a compressor 1 is connected by pipe through a four-way valve 2 to one end of a refrigerant passage 11a of a water heat exchanger 11. Another end of the refrigerant passage 11a is connected by pipe through an expansion valve 3, which is a pressure reducing unit, to one end of each of heat source side heat exchangers 4a and 4b. Another end of each of the heat source side heat exchangers 4a and 4b is connected by pipe through the four-way valve 2 and an accumulator 5 to a suction port of the compressor 1. These pipe-connections constitute a heat-pump refrigerating cycle.

When heating, as illustrated by arrows, the gas refrigerant is discharged from the compressor 1, passes through the four-way valve 2, and then flows through the refrigerant passage 11a of the water heat exchanger 11. The gas refrigerant flowing through the refrigerant passage 11a will be relieved of heat by the water flowing through the water passage 11b of the water heat exchanger 11, and will be condensed into a liquid refrigerant. The liquid refrigerant flows out of the refrigerant passage 11a of the water heat exchanger 11, is decompressed by the expansion valve 3, and flows into the heat source side heat exchangers 4a and 4b. Then, the liquid refrigerant draws heat from the outdoor air, and evaporates in the heat source side heat exchangers 4a and 4b. As a result, the liquid refrigerant changes into a gas refrigerant. The gas refrigerant flows out of the heat source side heat exchangers 4a and 4b, successively passes through the four-way valve 2 and the accumulator 5, and finally flows into the compressor 1. The refrigerant passage 11a of the water heat exchanger 11 functions as a condenser, and the heat source side heat exchangers 4a and 4b function as an evaporator.

An outdoor fan 6 and an outdoor-air-temperature sensor 7 are arranged near the heat source side heat exchangers 4a and 4b. The outdoor fan 6 draws in the outdoor air, which is a source of heat, and causes the drawn-in air to flow through the heat source side heat exchangers 4a and 4b. The outdoor-air-temperature sensor 7 detects temperature To of the outdoor air drawn in by the outdoor fan 6.

A suction port of a pump 13 is connected by pipe through a heater 12, which is an auxiliary source of heat, to an outlet port of the water passage 11b of the water heat exchanger 11. A discharge port of the pump 13 is connected by pipe to an end of each of space heating units 31, 32 and 33, which are loads. Another end of each of the space heating units 31, 32 and 33 is connected by pipe to an inlet port of the water passage 11b of the water heat exchanger 11. The pipe-connections of the water heat exchanger 11, the heater 12, the pump 13 and the space heating units 31, 32 and 33 constitute a water circulating cycle.

A water temperature sensor 14 which detects temperature Tw of circulating water is attached to the pipe between the other ends of the space heating units 31, 32 and 33 and the inlet port of the water passage 11b of the water heat exchanger 11. Specifically, the water temperature sensor 14 detects temperature Tw of water which flows out of the space heating units 31, 32 and 33 into the water heat exchanger 11.

The heater 12 applies heat to the water (hot water) which flows out of the water heat exchanger 11 depending on the need. For example, an electric heater or a gasfired boiler is used for the heater 12. The pump 13 sends the water having passed through the water heat exchanger 11 and the heater 12 to the space heating units 31, 32 and 33, and sends the water from the space heating units 31, 32 and 33 to the water heat exchanger 11. The space heating units 31, 32 and 33 discharge the heat of the inflowing water (hot water or cold water) to the air-conditioned space.

An outdoor unit A accommodates the compressor 1, the four-way valve 2, the expansion valve 3, the heat source side heat exchangers 4a and 4b, the accumulator 5, the outdoor fan 6 and the outdoor-air-temperature sensor 7. The outdoor unit A further accommodates an outdoor controller 10.

A water heat exchange unit (which may be referred to as a hydraulic unit) B accommodates the water heat exchanger 11, the heater 12, the pump 13 and the water temperature sensor 14. The water heat exchange unit B further accommodates a main controller 20. An operation display unit 21 is connected to the main controller 20. The operation display unit 21 comprises an operation button for specifying the start and stop of the operation of the heat-pump heat source apparatus, a control button for a preset temperature Tws, a control button for specifying the operation mode of the pump 13, and a display unit for indicating the operation state of the heat-pump heat source apparatus. The operation mode of the pump 13 includes a variable interval operation mode, a fixed interval operation mode and a continuous operation mode.

The outdoor controller 10 controls the compressor 1, the four-way valve 2, the expansion valve 3 and the outdoor fan 6 in accordance with an instruction from the main controller 20. The outdoor controller 10 notifies the main controller 20 of detected temperature (outdoor air temperature) To of the outdoor-air-temperature sensor 7.

The main controller 20 controls the heater 12 and the pump 13 based on the operation of the operation display unit 21, detected temperature Tw of the water temperature sensor 14, detected temperature To indicated by the outdoor controller 10, etc. The main controller 20 controls the compressor 1, the four-way valve 2, the expansion valve 3 and the outdoor fan 6 through the outdoor controller 10.

In particular, when the variable interval operation mode is specified in the operation display unit 21, the main controller 20 performs the process of a first control section 20a, the process of a first arithmetic section 20b, the process of a second control section 20c, the process of a third control section 20d, the process of a second arithmetic section 20e, the process of a fourth control section 20f and the process of a fifth control section 20g.

To start the operation of the heat-pump heat source apparatus, the first control section 20a starts the operation of the pump 13. A preset time after starting the operation of the pump 13, the first control section 20a performs on/off control for the operation of the compressor 1 such that detected temperature Tw of the water temperature sensor 14 is a preset temperature Tws. In this on/off control, specifically, when detected temperature Tw of the water temperature sensor 14 is less than a preset temperature Tws (Tw < Tws), the operation of the compressor 1 is started. When detected temperature Tw of the water temperature sensor 14 is greater than or equal to the preset temperature Tws (Tw $\geq$ Tws), the operation of the compressor 1 is stopped. The preset time is the minimum time required until temperature Tw of water having started flowing by the start of the operation of the pump 13 reaches a state where the load can be accurately recognized. A certain time (for example, three minutes) is selected as the preset time.

Detected temperature Tw of the water temperature sensor 14 at the time of stopping the operation of the compressor 1 by the on/off control of the first control section 20a is defined as Tw1. Detected temperature Tw of the water temperature sensor 14 certain time tb (in other words, a first time; for example, ten minutes) after stopping the operation of the compressor 1 by the on/off control of the first control section 20a is defined as Tw2. The first arithmetic section 20b divides the difference between detected temperature Tw2 and the preset temperature Tws (= Tw2 - Tws) by the amount of change in detected temperature Tw of the water temperature sensor 14 per unit time in certain time tb [= (Tw1 - Tw2) / tb]. In this way, the first arithmetic section 20b estimates necessary time tx1 from the end of certain time tb to the next presumable start of the operation of the compressor 1 by the on/off control of the first control section 20a. Certain time tb is the minimum time required to obtain a state where the load after stopping the operation of the compressor 1 can be accurately recognized from temperature Tw of water. The above operation can be expressed by:

$$tx1 = (Tw2 - Tws) / [(Tw1 - Tw2) / tb]$$

The second control section 20c stops the operation of the pump 13 certain time tb after stopping the operation of the compressor 1 by the on/off control of the first control section 20a. In particular, the second control section 20c stops the operation of the pump 13 certain time tb after stopping the operation of the compressor 1 by the on/off control of the first control section 20a on the condition that the estimated necessary time tx1 is greater than or equal to a predetermined time tc. The predetermined time tc is the minimum time to determine that the pump 13 can be temporarily stopped as the load is small.

The estimated necessary time tx1 after stopping the operation of the pump 13 by the second control section 20c, the third control section 20d causes the pump 13 to operate for only certain time ta, which is a second time.

When the operation of the compressor 1 is not started by the on/off control of the first control section 20a for certain time ta for which the pump 13 is caused to operate by the third control section 20d or the fourth control section 20f as described later, the second arithmetic section 20e defines detected temperature Tw of the water temperature sensor 14 at that time as detected temperature Tw3, and divides the difference between detected temperature Tw3 and the preset temperature Tws (= Tw3 - Tws) by the amount of change in detected temperature Tw of the water temperature sensor 14 per unit time in the combined time of necessary time tx1 and certain time ta [= (Tw2 - Tw3) / (tx1 + ta)]. In this way, the second arithmetic section 20e estimates necessary time tx2 from the end of the certain time ta operation of the pump 13 by the third control section 20d or the fourth control section 20f to the next presumable start of the operation of the compressor 1 by the on/off control of the first control section 20a. The above operation can be expressed by:

$$tx2 \{= (Tw3 - Tws) / [(Tw2 - Tw3) / (tx1 + ta)]\}$$

At the end of the estimated necessary time tx2 subsequent to the certain time ta operation of the pump 13 by the third control section 20d, the fourth control section 20f starts the operation of the pump 13. The fourth control section 20f causes the pump 13 to operate for only certain time ta. Subsequently, the process proceeds to the on/off control of the first control section 20a.

When the certain time ta operation of the pump 13 by the second control section 20c or the fourth control section 20f ends, and further when there is a change in the preset temperature Tws, or further when there is a change in detected temperature To of the outdoor-air-temperature sensor 7, or further when the operation display unit 21 is controlled so as to start the operation of the heat-pump heat source apparatus, the fifth control section 20g starts the operation of the compressor 1 and the operation of the pump 13. Subsequently, the process proceeds to the on/off control of the first control section.

When the fixed interval operation mode is specified in the operation display unit 21, the main controller 20 has a function for controlling the pump 13 so as to alternately repeat an on-state for certain time t-on and an off-state for certain time t-off, and performing on/off control for the operation of the compressor 1 such that detected temperature Tw of the water temperature sensor 14 in the on-state of the pump 13 is the preset temperature Tws. When the continuous operation mode is specified in the operation display unit 21, the main controller 20 has a function for causing the pump 13 to continuously operate, and performs on/off control for the operation of the compressor 1 such that detected temperature Tw of the water temperature sensor 14 is the preset temperature Tws.

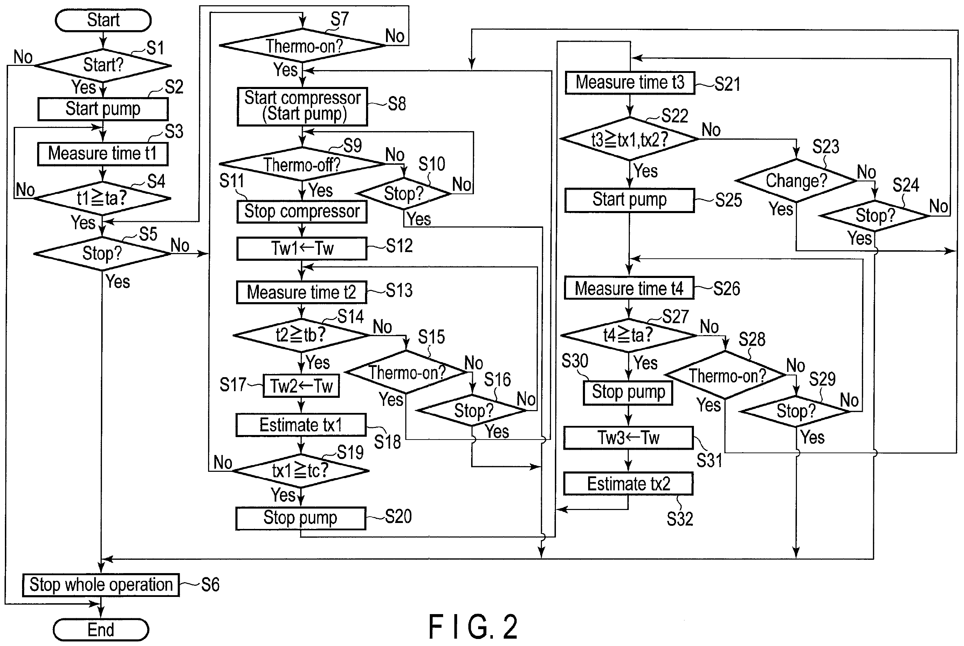

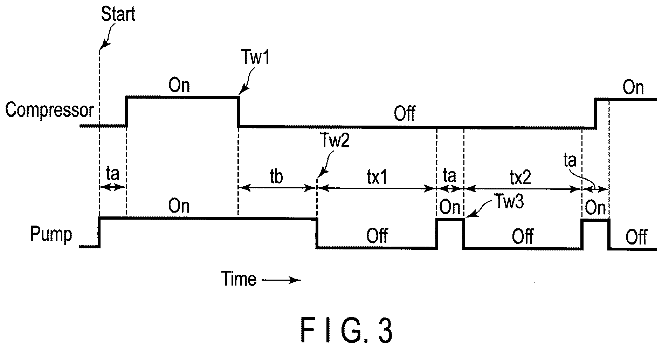

Now, this specification explains the control performed by the main controller 20 when the variable interval operation mode is specified in the operation display unit 21, referring to the flowchart of FIG. 2 and the timing chart of FIG. 3.

When the operation display unit 21 is controlled so as to start the heating operation (YES in step S1), the main controller 20 starts the operation of the pump 13 (step S2). The main controller 20 starts measuring time t1 (step S3) and compares time t1 with certain time ta (for example, three minutes) (step S4).

When time t1 reaches certain time ta (YES in step S4) such that the load can be accurately recognized from temperature Tw of water, the main controller 20 determines whether or not detected temperature Tw of the water temperature sensor 13 is in a thermo-on region less than the preset temperature Tws (step S7) on the condition that there is no operation to stop the apparatus in the operation display unit 21 (NO in step S5). When detected temperature Tw of the water temperature sensor 14 is not in the thermo-on region less than the preset temperature Tws (NO in step S7), the main controller 20 returns to the determination of step S5.

When an operation to stop the apparatus is performed in the operation display unit 21 (YES in step S5), the main controller 20 stops the whole operation (step S6).

When detected temperature Tw of the water temperature sensor 14 is in the thermo-on region less than the preset temperature Tws (YES in step S7), the main controller 20 starts the operation of the compressor 1 (thermo-on; step S8). The main controller 20 determines whether or not detected temperature Tw of the water temperature sensor 14 is in a thermo-off region greater than or equal to the preset temperature Tws (step S9). When detected temperature Tw of the water temperature sensor 14 is not in the thermo-off region greater than or equal to the preset temperature Tws (NO in step S9), the main controller 20 returns to the determination of step S9 on the condition that there is no operation to stop the apparatus in the operation display unit 21 (NO in step S10).

When an operation to stop the apparatus is performed in the operation display unit 21 (YES in step S10), the main controller 20 stops the whole operation (step S6).

When detected temperature Tw of the water temperature sensor 14 is increased to the thermo-off region greater than or equal to the preset temperature Tws (YES in step S9), the main controller 20 stops the operation of the compressor 1 (thermo-off; step S11) and updates detected temperature Tw of the water temperature sensor 14 as Tw1 (step S12). The main controller 20 starts measuring time t2 (step S13) and compares time t2 with certain time tb (for example, ten minutes) (step S14).

When time t2 is less than certain time tb (NO in step S14), the main controller 20 determines whether or not detected temperature Tw of the water temperature sensor 14 is in the thermo-on region less than the preset temperature Tws (step S15). When detected temperature Tw of the water temperature sensor 14 is not in the thermo-on region less than the preset temperature Tws (NO in step S15), the main controller 20 returns to step S13 and continues to measure time t2 on the condition that there is no operation to stop the apparatus in the operation display unit 21 (NO in step S16). When detected temperature Tw of the water temperature sensor 14 is in the thermo-on region less than the preset temperature Tws (YES in step S15), the main controller 20 returns to step S8 and starts the operation of the compressor 1.

When an operation to stop the apparatus is performed in the operation display unit 21 (YES in step S16), the main controller 20 stops the whole operation (step S6).

When time t2 reaches certain time tb (YES in step S14) such that the load after stopping the operation of the compressor 1 can be accurately recognized from temperature Tw of water, the main controller 20 updates detected temperature Tw of the water temperature sensor 14 as Tw2 (step S17). The main controller 20 estimates necessary time tx1 to the next presumable start of the operation of the compressor 1 in step S8 by the following equation based on stored detected temperatures Tw1 and Tw2, the preset temperature Tws and certain time tb (step S18).

$$tx1 = (Tw2 - Tws) / [(Tw1 - Tw2) / tb]$$

Subsequently, the main controller 20 compares the estimated necessary time tx1 with the predetermined time tc (step S19). When the estimated necessary time tx1 is less than the predetermined time tc (NO in step S19), in other words, when the load is not small, the main controller 20 returns to the thermo-on determination of step S7 based on a determination that the pump 13 cannot be temporarily stopped.

When necessary time tx1 is greater than or equal to the predetermined time tc (YES in step S19), in other words, when the load is small, the main controller 20 stops the operation of the pump 13 based on a determination that the pump 13 can be temporarily stopped (step S20). The main controller 20 starts measuring time t3 (step S21) and compares time t3 with the estimated necessary time tx1 (step S22).

When time t3 is less than necessary time tx1 (NO in step S22), the main controller 20 observes whether or not there is a change in the preset temperature Tws set in the operation display unit 21, whether or not there is a change in detected temperature To of the outdoor-air-temperature sensor 7 by a predetermined value (for example, 2°C) or greater, and whether or not there is a change in the operation button of the operation display unit 21 (in other words, an operation to start the apparatus is performed) (step S23). When none of these changes is detected (NO in step S23), the main controller 20 returns to step S21 and continues to measure time t3 on the condition that there is no operation to stop the apparatus in the operation display unit 21 (NO in step S24).

When any one of the above changes is detected (YES in step S23) while time t3 is less than necessary time tx1 (NO in step S22), the main controller 20 returns to step S8 and starts the operation of the compressor 1 and the operation of the pump 13.

When an operation to stop the apparatus is performed in the operation display unit 21 (YES in step S24), the main controller 20 stops the whole operation (step S6).

When time t3 reaches necessary time tx1 while none of the above changes is detected (YES in step 22), the main controller 20 starts the operation of the pump 13 (step S25). The main controller 20 starts measuring time t4 (step S26) and compares time t4 with certain time ta (step S27). When time t4 is less than certain time ta (NO in step S27), the main controller 20 observes whether or not detected temperature Tw of the water temperature sensor 14 is in the thermo-on region less than the preset temperature Tws (step S28). When detected temperature Tw of the water temperature sensor 14 enters the thermo-on region less than the preset temperature Tws (YES in step S28), the main controller 20 returns to step S8 and starts the operation of the compressor 1.

When detected temperature Tw of the water temperature sensor 14 is not in the thermo-on region less than the preset temperature Tws (NO in step S28), the main controller 20 returns to step S26 and continues to measure time t4 on the condition that there is no operation to stop the apparatus in the operation display unit 21 (NO in step S29).

When an operation to stop the apparatus is performed in the operation display unit 21 (YES in step S29), the main controller 20 stops the whole operation (step S6).

When time t4 reaches certain time ta while detected temperature Tw of the water temperature sensor 14 is not in the thermo-on region less than the preset temperature Tws (YES in step S27), the main controller 20 stops the operation of the pump 13 (step S30) and updates detected temperature Tw of the water temperature sensor 14 as Tw3 (step S31). Thus, when the operation of the compressor 1 is not started during the certain time ta operation of the pump 13, the operation of the pump 13 is forcibly stopped.

The main controller 20 estimates necessary time tx2 to the next presumable start of the operation of the compressor 1 in step S8 by the following equation based on stored detected temperatures Tw2 and Tw3, the preset temperature Tws and certain time ta (step S32).

$$Tx2 \{= (Tw3 - Tws) / [(Tw2 - Tw3) / (tx1 + ta)]\}$$

Subsequently, the main controller 20 returns to step S21. The main controller 20 starts measuring time t3 from zero and compares time t3 with the estimated necessary time tx2 (step S22).

When time t3 is less than necessary time tx2 (NO in step S22), the main controller 20 observes whether or not there is a change in the preset temperature Tws set in the operation display unit 21, whether or not there is a change in detected temperature To of the outdoor-air-temperature sensor 7 by a predetermined value (for example, 2°C) or greater, and whether or not there is a change in the operation button of the operation display device 21 (in other words, an operation to start the apparatus is performed) (step S23). When none of these changes is detected (NO in step S23), the main controller 20 returns to step S21 and continues to measure time t3 on the condition that there is no operation to stop the apparatus in the operation display unit 21 (NO in step S24).

When any one of the above changes is detected (YES in step S23) while time t3 is less than necessary time tx2 (NO in step S22), the main controller 20 returns to step S8 and starts the operation of the compressor 1 and the operation of the pump 13.

When time t3 reaches necessary time tx2 while none of the above changes is detected (YES in step S22), the main controller 20 starts the operation of the pump 13 (step S25). The main controller 20 starts measuring time t4 (step S26) and compares time t4 with certain time ta (step S27). When time t4 is less than certain time ta (NO in step S27), the main controller 20 observes whether or not detected temperature Tw of the water temperature sensor 14 is in the thermo-on region less than the preset temperature Tws (step S28). When detected temperature Tw of the water temperature sensor 14 enters the thermo-on region less than the preset temperature Tws (YES in step S28), the main controller 20 returns to step S8 and starts the operation of the compressor 1.

The main controller 20 repeats the above steps.

As explained above, necessary times tx1 and tx2 to the next presumable start of the operation of the compressor 1 are estimated by operations. For necessary times tx1 and tx2, the pump 13 is in an off-state. Thus, the power consumption of the pump 13 can be reduced. In this way, the energy-saving performance is improved.

At the presumable start time of the operation of the compressor 1 subsequent to the elapse of necessary times tx1 and tx2, water circulates because of the certain time ta operation of the pump 13. Thus, it is accurately recognize whether or not the current state is actually a load state which requires that the operation of the compressor 1 be started.

Certain time tb after stopping the operation of the compressor 1, the change in the temperature of water is detected. Certain time tb after stopping the operation of the compressor 1, the load can be accurately recognized based on temperature Tw of water. Thus, necessary times tx1 and tx2 can be accurately estimated.

In the above embodiment, the loads are the space heating units 31, 32 and 33. However, the present embodiment can be also applied to a case where the load is a hot water supply tank.

In the above embodiment, to start the operation of the apparatus, certain time ta is selected as a preset time required to start the operation of the compressor 1. After the elapse of each of necessary times tx1 and tx2, the pump 13 continues to operate for the same certain time ta. However, the times may be different from each other as long as they are greater than or equal to certain time ta.

The above embodiment and modification examples have been presented by way of example only, and are not intended to limit the scope of the invention. Indeed, the novel embodiment and modification examples described herein may be embodied in a variety of other forms; furthermore, various omissions, substitutions and changes in the form of the embodiment and modification examples described herein may be made without departing from the scope of the claims. The accompanying claims and their equivalents are intended to cover such forms or modifications as would fall within the scope of the invention.

**Claims**

1. A heat-pump heat source apparatus **characterized by** comprising:

    a heat-pump refrigerating cycle including a compressor (1), a water heat exchanger (11), a pressure reducing unit (3) and a heat source side heat exchanger (4a);
    a pump (13) configured to cause water to circulate between the water heat exchanger (11) and a load (31);
    a water temperature sensor (14) configured to detect temperature of the circulating water; and
    a controller (20) configured to control the compressor (1) and the pump (13) in accordance with the detected temperature of the water temperature sensor (14), wherein
    the controller (20) is configured to perform on/off control for an operation of the compressor (1) such that the detected temperature of the water temperature sensor (14) in an on-state of the pump (13) is a preset temperature,
    **characterized in that** the controller (20) is configured to estimate a first necessary time period (tx1) to a next presumable start of the operation of the compressor (1) based on change in the detected temperature of the water temperature sensor (14) in a first time period (tb) after stopping the operation of the compressor (1), and the controller (20) is configured to stop an operation of the pump (13) at the end of the first time period (tb) after stopping the operation of the compressor (1), and to cause the pump (13) to operate for only a second time period (ta) at the end of the estimated first necessary time period (tx1) after stopping the operation of the pump (13).

2. The apparatus according to Claim 1, **characterized in that** the water temperature sensor (14) is configured to detect the temperature of the water which flows out of the load into the water heat exchanger (11).

3. The apparatus according to Claim 1, **characterized in that** the controller (20) is configured to estimate the first necessary time period (tx1) by dividing a difference between a detected first temperature (Tw1) of the water temperature sensor (14) and the preset temperature after the first time period (tb) after stopping the operation of the compressor (1) by the on/off control by an amount of change per unit time of a detected second temperature (Tw2) of the water temperature sensor (14) in the first time period.

4. The apparatus according to Claim 1, **characterized in that** the controller (20) includes:

    a first control section (20a) configured to start the operation of the pump (13) to start an operation of the apparatus, and a certain time period (tb) as the first time period (tb) after starting the operation of the pump (13), to start the operation of the compressor (1) when the detected temperature (Tw) of the water temperature sensor (14) is less than the preset temperature (Tws), and to stop the operation of the compressor (1) when the detected temperature (Tw) is greater than or equal to the preset temperature (Tws);
    a first arithmetic section (20b) configured to estimate the first necessary time period (tx1) {= (Tw2 - Tws) / [(Tw1 - Tw2) / tb]} from an end of the certain time period (tb) to a next presumable start of the operation of the compressor (1) by the on/off control of the first control section (20a) by dividing a difference between a second detected temperature (Tw2) and the preset temperature (Tws) (= Tw2 - Tws) by an amount of change per unit time of the detected temperature (Tw) of the water temperature sensor (14) in the certain time period (tb) [= (Tw1 - Tw2) / tb], where the detected temperature (Tw) of the water temperature sensor (14) at the time of stopping the operation of the compressor (1) by the on/off control of the first control section (20a) is a detected first temperature (Tw1), and the detected temperature (Tw) of the water temperature sensor (14) the certain time period (tb) after stopping the operation of the compressor (1) by the on/off control of the first control section (20a) is the detected second temperature (Tw2);

a second control section (20c) configured to stop the operation of the pump (13) after the certain time period (tb) after stopping the operation of the compressor (1) by the on/off control of the first control section (20a);

a third control section (20d) configured to cause the pump (13) to operate for only a certain time period (ta) as the second time period, the estimated first necessary time period (tx1) after stopping the operation of the pump (13) by the second control section (20c);

a second arithmetic section (20e) configured to define, when the operation of the compressor (1) is not started by the on/off control of the first control section (20a) for the certain time period (ta) for which the pump (13) is caused to operate by the third control section (20d), the detected temperature (Tw) of the water temperature sensor (14) at that time as a detected third temperature (Tw3), and estimates a necessary time (tx2) $\{= (Tw3 - Tws) / [(Tw2 - Tw3) / (tx1 + ta)]\}$ from an end of the certain time period (ta) operation of the pump (13) by the third control section (20d) to a next presumable start of the operation of the compressor (1) by the on/off control of the first control section (20a) by dividing a difference between the detected third temperature (Tw3) and the preset temperature (Tws) (= Tw3 - Tws) by the amount of change per unit time of the detected temperature (Tw) of the water temperature sensor (14) in a combined time of the estimated first necessary time period (tx1) and the certain time period (ta) [= (Tw2 - Tw3) / (tx1 + ta)]; and

a fourth control section (20f) configured to cause, at the end of the estimated necessary time period (tx2) subsequent to the certain time period (ta) operation of the pump (13) by the third control section (20d), the pump (13) to operate for only the certain time period (ta).

5. The apparatus according to Claim 4, **characterized in that** the second control section (20c) is configured to stop the operation of the pump (13) the certain time period (tb) after stopping the operation of the compressor (1) by the on/off control of the first control section (20a) on the condition that the estimated first necessary time period (tx1) is greater than or equal to a predetermined time (tc).

6. The apparatus according to any one of Claims 4 and 5, **characterized in that** when a variable interval operation mode is specified, the controller (20) is configured to perform processes of the first control section (20a), the first arithmetic section (20b), the second control section (20c), the third control section (20d), the second arithmetic section (20e) and the fourth control section (20f),

when a fixed interval operation mode is specified, the controller (20) is configured to control the pump (13) so as to alternately repeat an on-state for a certain time t-on and an off-state for a certain time t-off, and performs on/off control for the operation of the compressor (1) such that the detected temperature (Tw) of the water temperature sensor (14) in the on-state of the pump (13) is the preset temperature (Tws), and

when a continuous operation mode is specified, the controller (20) is configured to cause the pump (13) to continuously operate, and performs on/off control for the operation of the compressor (1) such that the detected temperature (Tw) of the water temperature sensor (14) is the preset temperature (Tws).

7. The apparatus according to any one of Claims 4 and 5, **characterized by** further comprising:

an outdoor-air-temperature sensor (7) which detects outdoor air temperature,
**characterized in that**
the controller (20) further includes
a fifth control section (20g) configured to, when the certain time period (ta) operation of the pump (13) by the second control section (20c) or the fourth control section (20f) ends, and further when there is a change in the preset temperature (Tws), or further when there is a change in the detected temperature of the outdoor-air-temperature sensor (7), or further when an operation to start the apparatus is performed, start the operation of the compressor (1) and the operation of the pump (13), and proceed to the on/off control of the first control section (20a).

8. The apparatus according to Claim 7, **characterized in that**
when a variable interval operation mode is specified, the controller (20) is configured to perform processes of the first control section (20a), the first arithmetic section (20b), the second control section (20c), the third control section (20d), the second arithmetic section (20e), the fourth control section (20f) and the fifth control section (20g),
when a fixed interval operation mode is specified, the controller (20) is configured to control the pump (13) so as to alternately repeat an on-state for a certain time t-on and an off-state for a certain time t-off, and performs on/off control for the operation of the compressor (1) such that the detected temperature (Tw) of the water temperature sensor (14) in the on-state of the pump (13) is the preset temperature (Tws), and

when a continuous operation mode is specified, the controller (20) is configured to cause the pump (13) to continuously operate, and to perform on/off control for the operation of the compressor (1) such that the detected temperature Tw of the water temperature sensor (14) is the preset temperature (Tws).

## Patentansprüche

1. Wärmepumpen-Wärmequellen-Vorrichtung, aufweisend:

   einen Wärmepumpen-Kühlkreislauf mit einem Kompressor (1), einem Wasserwärmetauscher (11), einer Druckreduziereinheit (3) und einem wärmequellenseitigen Wärmetauscher (4a);
   eine Pumpe (13), die eingerichtet ist, Wasser zwischen dem Wasserwärmetauscher (11) und einem Verbraucher (31) zu zirkulieren;
   einen Wassertemperatursensor (14), der eingerichtet ist, die Temperatur des zirkulierenden Wassers zu erfassen; und
   einen Regler (20), der eingerichtet ist, den Kompressor (1) und die Pumpe (13) entsprechend der erfassten Temperatur des Wassertemperaturfühlers (14) zu steuern, wobei
   der Regler (20) eingerichtet ist, eine Ein/Aus-Steuerung für einen Betrieb des Kompressors (1) durchzuführen, so dass die erfasste Temperatur des Wassertemperaturfühlers (14) in einem Ein-Zustand der Pumpe (13) eine voreingestellte Temperatur ist,

   **dadurch gekennzeichnet, dass**

   d er Regler (20) eingerichtet ist, eine erste notwendige Zeitspanne (tx1) bis zu einem nächsten vermutlichen Beginn des Betriebs des Kompressors (1) auf der Grundlage einer Änderung der von dem Wassertemperaturfühler (14) erfassten Temperatur in einer ersten Zeitspanne (tb) nach dem beenden des Betriebs des Kompressors (1) zu schätzen, und
   d ie Steuerung (20) eingerichtet ist, einen Betrieb der Pumpe (13) am Ende der ersten Zeitspanne (tb) nach dem Beenden des Betriebs des Kompressors (1) zu beenden und die Pumpe (13) nur für eine zweite Zeitspanne (ta) am Ende der geschätzten ersten notwendigen Zeitspanne (tx1) nach dem Beenden des Betriebs der Pumpe (13) arbeiten zu lassen.

2. Vorrichtung nach Anspruch 1, **dadurch gekennzeichnet, dass** der Wassertemperatursensor (14) eingerichtet ist, die Temperatur des Wassers zu erfassen, das aus dem Verbraucher in den Wasserwärmetauscher (11) fließt.

3. Vorrichtung nach Anspruch 1, **dadurch gekennzeichnet, dass** die Steuerung (20) eingerichtet ist, die erste notwendige Zeitspanne (tx1) zu schätzen, indem sie eine Differenz zwischen der erfassten ersten Temperatur (Tw1) des Wassertemperatursensors (14) und der voreingestellten Temperatur nach der ersten Zeitspanne (tb) nach dem Beenden des Betriebs des Kompressors (1) durch die Ein/Aus-Steuerung durch einen Änderungsbetrag pro Zeiteinheit der erfassten zweiten Temperatur (Tw2) des Wassertemperatursensors (14) in der ersten Zeitspanne dividiert.

4. Vorrichtung nach Anspruch 1, **dadurch gekennzeichnet, dass** der Regler (20) umfasst:

   einen ersten Regelabschnitt (20a), der eingerichtet ist, den Betrieb der Pumpe (13) zu starten, einen Betrieb der Vorrichtung zu starten, und eine bestimmte Zeitspanne (tb) als die erste Zeitspanne (tb) nach dem Starten des Betriebs der Pumpe (13) den Betrieb des Kompressors (1) zu starten, wenn die vom Wassertemperaturfühler (14) erfasste Temperatur (Tw) kleiner als die voreingestellte Temperatur (Tws) ist, und den Betrieb des Verdichters (1) zu beenden, wenn die erfasste Temperatur (Tw) größer oder gleich der voreingestellten Temperatur (Tws) ist;
   einen ersten arithmetischen Abschnitt (20b), der eingerichtet ist, die erste notwendige Zeitspanne (tx1) {= (Tw2 - Tws) / [(Tw1 - Tw2) / tb]} von einem Ende der bestimmten Zeitspanne (tb) bis zu einem nächsten vermutlich Beginn des Betriebs des Kompressors (1) durch die Ein/Aus-Steuerung des ersten Regelabschnitts (20a) zu schätzen, indem eine Differenz zwischen einer zweiten erfassten Temperatur (Tw2) und der voreingestellten Temperatur (Tws) (= Tw2 - Tws) durch einen Betrag der Änderung der von dem Wassertemperaturfühler (14) erfassten Temperatur (Tw) in der bestimmten Zeitspanne (tb) [= (Tw1 - Tw2) / tb], dividiert wird, wobei die vom Wassertemperaturfühler (14) erfasste Temperatur (Tw) zum Zeitpunkt des Beendens des Betriebs des Kompressors (1) durch die Ein/Aus-Steuerung des ersten Regelabschnitts (20a) eine erfasste erste Temperatur (Tw1) ist, und die vom Wassertemperaturfühler (14) erfasste Temperatur (Tw) die bestimmte Zeitspanne (tb) nach Beenden des Betriebs des Kompressors (1) durch die Ein/Aus-Steuerung des ersten Regelabschnitts (20a) die erfasste zweite Temperatur (Tw2) ist;

einen zweiten Regelabschnitt (20c), der eingerichtet ist, den Betrieb der Pumpe (13) nach einer bestimmten Zeitspanne (tb) nach dem Beenden des Betriebs des Kompressors (1) durch die Ein/Aus-Steuerung des ersten Regelabschnitts (20a) zu stoppen;

einen dritten Regelabschnitt (20d), der eingerichtet ist, zu bewirken, dass die Pumpe (13) nur für eine bestimmte Zeitspanne (ta) als zweite Zeitspanne arbeitet, die geschätzte erste notwendige Zeitspanne (tx1) nach dem Beenden des Betriebs der Pumpe (13) durch den zweiten Regelabschnitt (20c);

einen zweiten arithmetischen Abschnitt (20e), der eingerichtet ist, dass er, wenn der Betrieb des Verdichters (1) nicht durch die Ein/Aus-Steuerung des ersten Regelabschnitts (20a) für den bestimmten Zeitraum (ta), für den die Pumpe (13) durch den dritten Regelabschnitt (20d) betrieben wird, gestartet wird, die zu diesem Zeitpunkt erfasste Temperatur (Tw) des Wassertemperatursensors (14) als eine erfasste dritte Temperatur (Tw3) definiert, und eine notwendige Zeit (tx2) $\{= (Tw3 - Tws) / [(Tw2 - Tw3) / (tx1 + ta)]\}$ von einem Ende der bestimmten Zeitspanne (ta) des Betriebes der Pumpe (13) durch den dritten Regelabschnitt (20d) bis zu einem nächsten mutmaßlichen Start des Betriebs des Verdichters (1) durch die Ein/Aus-Steuerung des ersten Regelabschnitts (20a) durch Division einer Differenz zwischen der erfassten dritten Temperatur (Tw3) und der eingestellten Temperatur (Tws) $(= Tw3 - Tws)$ um den Betrag der Änderung pro Zeiteinheit der erfassten Temperatur (Tw) des Wassertemperatur-Sensors (14) in einer kombinierten Zeit der geschätzten ersten notwendigen Zeitspanne (tx1) und der bestimmten Zeitspanne (ta) $[= (Tw2 - Tw3) / (tx1 + ta)]$ schätzt; und

einen vierten Regelabschnitt (20f), der eingerichtet ist, am Ende des geschätzten notwendigen Zeitraums (tx2) nach dem Betrieb der Pumpe (13) durch den dritten Regelabschnitt (20d) zu bewirken, dass die Pumpe (13) nur für den bestimmten Zeitraum (ta) arbeitet.

5.  Vorrichtung nach Anspruch 4, **dadurch gekennzeichnet, dass**

der zweite Regelabschnitt (20c) eingerichtet ist, den Betrieb der Pumpe (13) die bestimmte Zeitspanne (tb) nach dem Beenden des Betriebs des Verdichters (1) durch die Ein/Aus-Steuerung des ersten Regelabschnitts (20a) zu beenden, unter der Bedingung, dass die geschätzte erste notwendige Zeitspanne (tx1) größer oder gleich einer vorbestimmten Zeit (tc) ist.

6.  Vorrichtung nach einem der Ansprüche 4 und 5, **dadurch gekennzeichnet, dass**

wenn eine Betriebsart mit variablem Intervall angegeben ist, der Regler (20) eingerichtet ist, Prozesse des ersten Regelabschnitts (20a), des ersten arithmetischen Abschnitts (20b), des zweiten Regelabschnitts (20c), des dritten Regelabschnitts (20d), des zweiten arithmetischen Abschnitts (20e) und des vierten Regelabschnitts (20f) auszuführen,

der Regler (20) eingerichtet ist, die Pumpe (13) so zu steuern, dass er abwechselnd einen Ein-Zustand für eine bestimmte Zeit t-on und einen Aus-Zustand für eine bestimmte Zeit t-off wiederholt, und eine Ein/Aus-Regelung für den Betrieb des Verdichters (1) durchführt, so dass die vom Wassertemperaturfühler (14) erfasste Temperatur (Tw) im Ein-Zustand der Pumpe (13) die voreingestellte Temperatur (Tws) ist, und

der Regler (20) eingerichtet ist, den kontinuierlichen Betrieb der Pumpe (13) zu veranlassen und den Betrieb des Kompressors (1) so zu regeln, dass die vom Wassertemperaturfühler (14) erfasste Temperatur (Tw) die eingestellte Temperatur (Tws) ist.

7.  Vorrichtung nach einem der Ansprüche 4 und 5, **dadurch gekennzeichnet, dass** sie ferner aufweist:

einen Außenlufttemperaturfühler (7), der die Außenlufttemperatur erfasst,
**dadurch gekennzeichnet, dass**
der Regler (20) weiterhin aufweist
einen fünften Regelabschnitt (20g), der eingerichtet ist, wenn der bestimmte Zeitraum (ta) des Betriebs der Pumpe (13) durch den zweiten Regelabschnitt (20c) oder den vierten Regelabschnitt (20f) endet, und weiter, wenn es eine Änderung der voreingestellten Temperatur (Tws) gibt, oder weiter, wenn sich die vom Außenlufttemperaturfühler (7) erfasste Temperatur ändert, oder weiter, wenn ein Vorgang zum Starten der Vorrichtung durchgeführt wird, den Betrieb des Verdichters (1) und den Betrieb der Pumpe (13) zu starten und zur Ein/Aus-Steuerung des ersten Steuerteils (20a) überzugehen.

**8.** Vorrichtung nach Anspruch 7, **dadurch gekennzeichnet, dass**

wenn eine Betriebsart mit variablem Intervall angegeben ist, der Regler (20) eingerichtet ist, Prozesse des ersten Regelabschnitts (20a), des ersten arithmetischen Abschnitts (20b), des zweiten Regelabschnitts (20c), des dritten Regelabschnitts (20d), des zweiten arithmetischen Abschnitts (20e), des vierten Regelabschnitts (20f) und des fünften Regelabschnitts (20g) auszuführen,

der Regler (20) eingerichtet ist, Pumpe (13) so zu steuern, dass er abwechselnd einen Ein-Zustand für eine bestimmte Zeit t-on und einen Aus-Zustand für eine bestimmte Zeit t-off wiederholt, und eine Ein/Aus-Regelung für den Betrieb des Verdichters (1) durchführt, so dass die vom Wassertemperaturfühler (14) erfasste Temperatur (Tw) im Ein-Zustand der Pumpe (13) die voreingestellte Temperatur (Tws) ist, und

der Regler (20) eingerichtet ist, den kontinuierlichen Betrieb der Pumpe (13) zu veranlassen und den Betrieb des Kompressors (1) so zu regeln, dass die vom Wassertemperaturfühler (14) erfasste Temperatur Tw die eingestellte Temperatur (Tws) ist.

## Revendications

**1.** Appareil de source de chaleur de pompe à chaleur **caractérisé en ce qu'**il comprend :

un cycle de réfrigération de pompe à chaleur comprenant un compresseur (1), un échangeur de chaleur d'eau (11), une unité de réduction de pression (3) et un échangeur de chaleur côté source de chaleur (4a) ;

une pompe (13) configurée pour amener l'eau à circuler entre l'échangeur de chaleur d'eau (11) et une charge (31) ;

un capteur de température d'eau (14) configuré pour détecter la température de l'eau en circulation ; et

un contrôleur (20) configuré pour commander le compresseur (1) et la pompe (13) conformément à la température détectée du capteur de température d'eau (14),

dans lequel

le contrôleur (20) est configuré pour effectuer une commande tout ou rien pour le fonctionnement du compresseur (1) de sorte que la température détectée du capteur de température d'eau (14) dans un état activé de la pompe (13) soit une température prédéterminée,

**caractérisé en ce que**

le contrôleur (20) est configuré pour estimer une première période de temps nécessaire (tx1) jusqu'à un début présumé suivant du fonctionnement du compresseur (1) sur la base d'un changement de la température détectée du capteur de température d'eau (14) dans une première période de temps (tb) après l'arrêt du fonctionnement du compresseur (1), et

le contrôleur (20) est configuré pour arrêter le fonctionnement de la pompe (13) à la fin de la première période de temps (tb) après l'arrêt du fonctionnement du compresseur (1), et pour amener la pompe (13) à fonctionner uniquement pendant une deuxième période de temps (ta) à la fin de la première période de temps nécessaire (tx1) estimée après l'arrêt du fonctionnement de la pompe (13).

**2.** Appareil selon la revendication 1, **caractérisé en ce que**

le capteur de température d'eau (14) est configuré pour détecter la température de l'eau qui s'écoule hors de la charge dans l'échangeur de chaleur d'eau (11).

**3.** Appareil selon la revendication 1, **caractérisé en ce que**

le contrôleur (20) est configuré pour estimer la première période de temps nécessaire (tx1) en divisant une différence entre une première température détectée (Tw1) du capteur de température d'eau (14) et la température prédéterminée après la première période de temps (tb) après l'arrêt du fonctionnement du compresseur (1) par la commande tout ou rien par une quantité de changement par unité de temps d'une deuxième température détectée (Tw2) du capteur de température d'eau (14) dans la première période de temps.

**4.** Appareil selon la revendication 1, **caractérisé en ce que**

le contrôleur (20) comprend :

une première section de commande (20a) configurée pour démarrer le fonctionnement de la pompe (13) pour démarrer un fonctionnement de l'appareil, et une certaine période de temps (tb) en tant que première période de temps (tb) après le démarrage du fonctionnement de la pompe (13), pour démarrer le fonctionnement du compresseur (1) lorsque la température détectée (Tw) du capteur de température d'eau (14) est inférieure à la température prédéterminée (Tws), et pour arrêter le fonctionnement du compresseur (1) lorsque la température détectée (Tw) est supérieure ou égale à la température prédéterminée (Tws) ;

une première section arithmétique (20b) configurée pour estimer la première période de temps nécessaire (tx1) {= (Tw2 - Tws)/[(Tw1 - Tw2)/tb]} d'une fin de la certaine période de temps (tb) jusqu'à un début présumé suivant du fonctionnement du compresseur (1) par la commande tout ou rien de la première section de commande (20a) en divisant une différence entre une deuxième température détectée (Tw2) et la température prédéterminée (Tws) (= Tw2 - Tws) par une quantité de changement par unité de temps de la température détectée (Tw) du capteur de température d'eau (14) dans la certaine période de temps (tb) [= (Tw1 - Tw2)/tb], où la température détectée (Tw) du capteur de température d'eau (14) à l'instant de l'arrêt du fonctionnement du compresseur (1) par la commande tout ou rien de la première section de commande (20a) est une première température détectée (Tw1), et la température détectée (Tw) du capteur de température d'eau (14) la certaine période de temps (tb) après l'arrêt du fonctionnement du compresseur (1) par la commande tout ou rien de la première section de commande (20a) est la deuxième température détectée (Tw2) ;

une deuxième section de commande (20c) configurée pour arrêter le fonctionnement de la pompe (13) après la certaine période de temps (tb) après l'arrêt du fonctionnement du compresseur (1) par la commande tout ou rien de la première section de commande (20a) ;

une troisième section de commande (20d) configurée pour amener la pompe (13) à fonctionner uniquement pendant une certaine période de temps (ta) en tant que deuxième période de temps, la première période de temps nécessaire (tx1) estimée après l'arrêt du fonctionnement de la pompe (13) par la deuxième section de commande (20c) ;

une deuxième section arithmétique (20e) configurée pour définir, lorsque le fonctionnement du compresseur (1) n'est pas démarré par la commande tout ou rien de la première section de commande (20a) pendant la certaine période de temps (ta) pendant laquelle la pompe (13) est amenée à fonctionner par la troisième section de commande (20d), la température détectée (Tw) du capteur de température d'eau (14) à cet instant en tant que troisième température détectée (Tw3), et estimer un temps nécessaire (tx2) {= (Tw3 - Tws)/[(Tw2 - Tw3)/(tx1 + ta)]} d'une fin de la certaine période de temps (ta) de fonctionnement de la pompe (13) par la troisième section de commande (20d) jusqu'à un début présumé suivant du fonctionnement du compresseur (1) par la commande tout ou rien de la première section de commande (20a) en divisant une différence entre la troisième température détectée (Tw3) et la température prédéterminée (Tws) (= Tw3 - Tws) par la quantité de changement par unité de temps de la température détectée (Tw) du capteur de température d'eau (14) dans un temps combiné de la première période de temps nécessaire (tx1) estimée et de la certaine période de temps (ta) [= (Tw2 - Tw3)/(tx1 + ta)] ; et

une quatrième section de commande (20f) configurée pour amener, à la fin de la période de temps nécessaire (tx2) estimée à la suite de la certaine période de temps (ta) de fonctionnement de la pompe (13) par la troisième section de commande (20d), la pompe (13) à fonctionner uniquement pendant la certaine période de temps (ta).

5. Appareil selon la revendication 4, **caractérisé en ce que**
la deuxième section de commande (20c) est configurée pour arrêter le fonctionnement de la pompe (13) la certaine période de temps (tb) après l'arrêt du fonctionnement du compresseur (1) par la commande tout ou rien de la première section de commande (20a) à condition que la première période de temps nécessaire (tx1) estimée soit supérieure ou égale à un temps prédéterminé (tc).

6. Appareil selon l'une quelconque des revendications 4 et 5, **caractérisé en ce que**
lorsqu'un mode de fonctionnement à intervalle variable est spécifié, le contrôleur (20) est configuré pour effectuer les processus de la première section de commande (20a), de la première section arithmétique (20b), de la deuxième section de commande (20c), de la troisième section de commande (20d), de la deuxième section arithmétique (20e) et de la quatrième section de commande (20f),
lorsqu'un mode de fonctionnement à intervalle fixe est spécifié, le contrôleur (20) est configuré pour commander la pompe (13) de manière à répéter alternativement un état activé pendant un certain temps t-on et un état désactivé pendant un certain temps t-off, et effectue une commande tout ou rien pour le fonctionnement du compresseur (1) de sorte que la température détectée (Tw) du capteur de température d'eau (14) dans l'état activé de la pompe (13) soit la température prédéterminée (Tws), et
lorsqu'un mode de fonctionnement continu est spécifié, le contrôleur (20) est configuré pour amener la pompe (13) à fonctionner continûment, et effectue une commande tout ou rien pour le fonctionnement du compresseur (1) de sorte que la température détectée (Tw) du capteur de température d'eau (14) soit la température prédéterminée (Tws).

7. Appareil selon l'une quelconque des revendications 4 et 5, **caractérisé en ce qu'**il comprend en outre :

un capteur de température d'air extérieur (7) qui détecte la température de l'air extérieur,

**caractérisé en ce que**

le contrôleur (20) comprend en outre

une cinquième section de commande (20g) configurée pour, lorsque la certaine période de temps (ta) de fonctionnement de la pompe (13) par la deuxième section de commande (20c) ou la quatrième section de commande (20f) se termine, et en outre lorsqu'il y a un changement de la température prédéterminée (Tws), ou en outre lorsqu'il y a un changement de la température détectée du capteur de température d'air extérieur (7), ou en outre lorsqu'une opération pour démarrer l'appareil est effectuée, démarrer le fonctionnement du compresseur (1) et le fonctionnement de la pompe (13), et procéder à la commande tout ou rien de la première section de commande (20a).

8. Appareil selon la revendication 7, **caractérisé en ce que**

lorsqu'un mode de fonctionnement à intervalle variable est spécifié, le contrôleur (20) est configuré pour effectuer les processus de la première section de commande (20a), de la première section arithmétique (20b), de la deuxième section de commande (20c), de la troisième section de commande (20d), de la deuxième section arithmétique (20e), de la quatrième section de commande (20f) et de la cinquième section de commande (20g),

lorsqu'un mode de fonctionnement à intervalle fixe est spécifié, le contrôleur (20) est configuré pour commander la pompe (13) de manière à répéter alternativement un état activé pendant un certain temps t-on et un état désactivé pendant un certain temps t-off, et effectue une commande tout ou rien pour le fonctionnement du compresseur (1) de sorte que la température détectée (Tw) du capteur de température d'eau (14) dans l'état activé de la pompe (13) soit la température prédéterminée (Tws), et

lorsqu'un mode de fonctionnement continu est spécifié, le contrôleur (20) est configuré pour amener la pompe (13) à fonctionner continûment, et pour effectuer une commande tout ou rien pour le fonctionnement du compresseur (1) de sorte que la température détectée Tw du capteur de température d'eau (14) soit la température prédéterminée (Tws).

F I G. 1

EP 3 225 921 B1

Start

S1 — Start?
No → (loop)
Yes ↓

S2 — Start pump

S3 — Measure time t1

S4 — t1≧ta?
No → (loop)
Yes ↓

S5 — Stop?
No → (to S7)
Yes ↓

S6 — Stop whole operation

End

S7 — Thermo-on?
No → (loop)
Yes ↓

S8 — Start compressor (Start pump)

S9 — Thermo-off?
No → S10 Stop?
No → (loop to S8)
Yes → (to S6)
Yes ↓

S11 — Stop compressor

S12 — Tw1←Tw

S13 — Measure time t2

S14 — t2≧tb?
No → S15 Thermo-on?
Yes → (loop)
No → S16 Stop?
Yes → (to S6)
No → (loop)
Yes ↓

S17 — Tw2←Tw

Estimate tx1

S19 — tx1≧tc?
No → (loop)
Yes ↓

S20 — Stop pump

S21 — Measure time t3

S22 — t3≧tx1,tx2?
No → S23 Change?
No → S24 Stop?
No → (loop)
Yes → (to S6)
Yes → (loop)
Yes ↓

S25 — Start pump

S26 — Measure time t4

S27 — t4≧ta?
No → S28 Thermo-on?
Yes → (loop)
No → S29 Stop?
Yes → (to S6)
No → (loop)
Yes ↓

S30 — Stop pump

S31 — Tw3←Tw

S32 — Estimate tx2

F I G. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006258340 A

- EP 2873932 A1